Europäisches Patentamt

European Patent Office

Office européen des brevets

(19)

(11) Numéro de publication: **0 320 357 B1**

(12) **FASCICULE DE BREVET EUROPEEN**

(45) Date de publication de fascicule du brevet: **21.10.92**  (51) Int. Cl.⁵: **G21C 19/36**, B21F 11/00

(21) Numéro de dépôt: **88403072.7**

(22) Date de dépôt: **05.12.88**

(54) **Machine pour l'enlèvement du fil espaceur des aiguilles de combustible nucléaire.**

(30) Priorité: **07.12.87 FR 8716979**

(43) Date de publication de la demande:
**14.06.89 Bulletin 89/24**

(45) Mention de la délivrance du brevet:
**21.10.92 Bulletin 92/43**

(84) Etats contractants désignés:
**DE GB**

(56) Documents cités:
**EP-A- 0 118 328
FR-A- 1 529 707
FR-A- 2 297 480**

(73) Titulaire: **COMMISSARIAT A L'ENERGIE ATO-
MIOUE Etablissement de Caractère Scientifique Technique et Industriel
31/33, rue de la Fédération
F-75015 Paris(FR)**

(72) Inventeur: **Colas, Jean
Venejan
F-30200 Bagnols sur Ceze(FR)**

(74) Mandataire: **Mongrédien, André et al
c/o BREVATOME 25, rue de Ponthieu
F-75008 Paris(FR)**

Rank Xerox (UK) Business Services

## Description

La présente invention a pour objet une machine destinée à enlever le fil espaceur des aiguilles de combustible nucléaire applicable notamment, mais non exclusivement, aux aiguilles utilisées dans les réacteurs nucléaires à neutrons rapides.

Dans le cadre du retraitement du combustible irradié, il s'avère nécessaire d'enlever le fil espaceur enroulé en hélice autour des aiguilles avant de cisailler ces dernières. Il est souhaitable que cette opération soit réalisée par une machine automatique, dans un temps réduit (c'est-à-dire inférieur à 1 minute), et il est souhaitable que les déchets de fil soient conditionnés dans le minimum de volume.

Il existe actuellement deux types de machines pour retirer le fil espaceur des aiguilles de combustible nucléaire.

Le premier type de machine est utilisé exclusivement pour enlever le fil des aiguilles de couverture radiale des réacteurs nucléaires à neutrons rapides. Dans ces machines, on fraise les points de soudure servant à fixer le fil espaceur sur les aiguilles et on enroule le fil en petites bobines. En effet, dans ce type d'aiguilles, les fils espaceurs sont suffisamment ductiles, et donc déformables, pour pouvoir être enroulés par la machine en petites bobines.

Cependant, l'enroulement du fil n'est pas applicable aux fils espaceurs des aiguilles combustibles car les forts taux d'irradiation subis ont fragilisé ces fils et la moindre courbure provoque leur rupture.

Le document EP.A.0 118 328 correspondant au FR-A-2 539 660 décrit un second type de machine apte à enlever le fil espaceur d'aiguilles combustibles. Cette machine comporte une série d'électrodes entourant l'aiguille dans une section droite de cette dernière. On fait jaillir successivement une série d'arcs électriques entre chaque électrode et l'aiguille. Comme les points d'impact de l'arc sur l'aiguille se recouvrent, l'un au moins de ces arcs provoque la rupture du fil. L'aiguille est avancée d'une certaine distance et on fait à nouveau jaillir la série d'arcs électriques.

Ce procédé fonctionne correctement mais présente deux inconvénients principaux. Tout d'abord, l'amorçage de l'arc nécessite une source de tension haute fréquence qui introduit beaucoup de parasites dans les automatismes de commande des autres composants à cause de l'"effet d'antenne" par les câbles de tous les capteurs fonctionnant avec des courants faibles. D'autre part, la longueur de coupe des tronçons de fil est relativement grande (de l'ordre de 250 mm) à cause de la nécessité de limiter le nombre d'arcs déclenchés pour une aiguille donnée. En effet, ces arcs entraînent une pollution et une usure des électrodes à chaque coupe, ce qui limite la durée de vie des électrodes. De plus, la grande longueur des tronçons de fil ainsi découpés ne permet pas un bon empilement dans les récipients utilisés pour leur évacuation, ce qui représente un fort volume de déchets.

La présente invention a pour but de remédier à ces inconvénients en proposant une machine qui permet le découpage simple et rapide du fil espaceur des aiguilles de combustible nucléaire en tronçons de courte longueur (de l'ordre de 10 mm), ce qui permet d'avoir un taux de compacité élevé lors de la chute naturelle de ces morceaux dans un réceptacle.

La machine objet de l'invention sert à l'enlèvement du fil espaceur d'une aiguille de combustible nucléaire, le fil étant enroulé en hélice autour de l'aiguille, et celle-ci étant sensiblement de forme cylindrique.

Selon la principale caractéristique de cette machine, celle-ci comprend :
- une première et une deuxième pièces tournantes mobiles en rotation autour d'un même axe et ayant chacune :
  . une face avant,
  . une face arrière, la face avant de la deuxième pièce tournante étant sensiblement en contact avec la face arrière de la première,
  . un passage central le long duquel peut passer ladite aiguille, ce passage présentant une ouverture d'entrée sur la face avant et une ouverture de sortie sur la face arrière et ayant une forme sensiblement cylindrique d'axe confondu avec ledit axe de rotation, et
  . une série de trous à travers chacun desquels le fil peut passer, ces trous étant plus éloignés que le passage central de l'axe de rotation et ayant une ouverture d'entrée sur la face avant et une ouverture de sortie sur la face arrière, la disposition étant telle que l'ouverture de sortie d'un trou de la première pièce tournante puisse coïncider au moins partiellement avec l'ouverture d'entrée d'un trou de la deuxième pièce tournante,
- des moyens d'entraînement en rotation de la première pièce tournante,
- des moyens d'entraînement en rotation de la deuxième pièce tournante, et
- des moyens d'entraînement de l'aiguille en translation suivant son axe pour la faire passer à travers les passages centraux des pièces tournantes.

En général, le fil est fixé sur l'aiguille par au moins un point de soudure, dans la plupart des cas un point de soudure à chaque extrémité. Dans ce cas, l'ouverture d'entrée du passage central de la première pièce tournante a des dimensions légèrement supérieures à la section droite de l'aiguille et la première pièce tournante comprend :

- une partie en forme de fraise située au niveau de ladite ouverture d'entrée et constituée de manière à casser le point de soudure lorsque l'aiguille pénètre dans ledit passage central par l'ouverture d'entrée, et
- une partie en forme de tronc de cône s'élargissant depuis ladite partie en forme de fraise jusqu'à la zone où se trouvent le ou les trous de la première pièce tournante.

Comme on le verra plus loin, les moyens d'entraînement de l'aiguille sont agencés de manière à faire pénétrer celle-ci d'abord dans le passage central de la première pièce tournante par l'ouverture d'entrée de ce passage. La partie en forme de fraise permet de détacher le point de soudure et l'extrémité du fil ainsi libérée passe sur ladite partie en forme de tronc de cône et arrive dans un trou de la première pièce tournante au fur et à mesure de l'avancement de l'aiguille sous l'action des moyens d'entraînement de cette dernière. Le mouvement se poursuivant, le fil traverse complètement le trou de la première pièce tournante. Comme les deux pièces tournantes sont entraînées en rotation à des vitesses différentes, il arrive un moment où le trou de la première pièce coïncide plus ou moins avec un trou de la deuxième pièce et le fil peut pénétrer dans le trou de la deuxième pièce. Le mouvement de rotation se poursuivant, le fil finit par être cisaillé au moment où les deux trous ne sont plus en coïncidence.

On obtient ainsi facilement par cisaillement des tronçons de fil de courte longueur, la longueur de ces tronçons étant déterminée par la vitesse d'avance de l'aiguille, la forme et les dimensions des trous et les vitesses de rotation des deux pièces tournantes.

Selon une autre caractéristique de la machine objet de l'invention, les moyens d'entraînement précités se trouvent d'un côté de l'ensemble constitué par les deux pièces tournantes et la machine comporte d'autres moyens d'entraînement situés de l'autre côté de cet ensemble.

En effet, les moyens d'entraînement étant disposés de manière à faire pénétrer l'aiguille dans les passages centraux des deux pièces tournantes par l'ouverture d'entrée de la première de ces deux pièces, il est nécessaire d'entraîner et de guider l'aiguille une fois qu'elle a complètement traversé ces deux pièces.

Selon un autre aspect de l'invention, cette machine comporte en outre des moyens pour appliquer le fil sur l'aiguille avant que celle-ci ne pénètre dans le passage central de l'une des pièces tournantes, en principe la première.

Selon un mode de réalisation préféré, ces moyens d'application comprennent :

- un premier galet ayant une gorge apte à recevoir l'aiguille,
- un deuxième galet ayant une gorge apte à recevoir l'aiguille, les dimensions des deux galets étant telles que leurs vitesses tangentielles au point de contact avec l'aiguille soient égales,
- des moyens pour pousser le deuxième galet en direction du premier, et
- des moyens pour entraîner simultanément en rotation les deux galets.

De préférence, les deux galets sont des galets dentés de même diamètre engrenant l'un sur l'autre et lesdits moyens d'entraînement simultané en rotation de ces deux galets comprennent des moyens d'entraînement en rotation du premier galet synchronisés avec les moyens d'entraînement en translation de l'aiguille afin que ladite vitesse tangentielle soit égale à la vitesse imprimée à l'aiguille par lesdits moyens d'entraînement en translation.

Le but de ces moyens d'application du fil sur l'aiguille est de maintenir le fil tendu sur l'aiguille une fois que le premier point de soudure a été fraisé, afin que l'extrémité du fil puisse glisser sur la partie en forme de tronc de cône de la première pièce tournante et arriver dans les trous de la première et de la deuxième pièces tournantes.

Les moyens d'entraînement en rotation de la première pièce tournante sont synchronisés avec les moyens d'entraînement en translation de l'aiguille afin que la première pièce tournante effectue un tour complet lorsque l'aiguille avance d'une distance égale au pas du fil espaceur.

En effet, l'aiguille est entraînée en translation à travers les passages centraux des pièces tournantes et elle est immobilisée en rotation. Comme le fil est enroulé en hélice autour de l'aiguille, au fur et à mesure qu'on coupe celui-ci, son extrémité se déplace dans une section droite de l'aiguille. Cette synchronisation permet de faire en sorte que la partie de fil comprise entre les galets presseurs précités et la première pièce tournante ne soit pas déformée par rotation différentielle des points de maintien de ses extrémités, ce qui l'empêcherait de pénétrer dans les trous ou de poursuivre son avance dans l'un de ces trous.

Selon une autre caractéristique de la machine objet de l'invention, les moyens d'entraînement de l'aiguille en translation comprennent :

- un chariot,
- une pince solidaire de ce chariot et apte à enserrer l'aiguille, et
- des moyens d'entraînement du chariot en translation.

Dans ce cas, il est préférable que les moyens d'entraînement comprennent en outre un limiteur d'effort pour contrôler l'effort exercé par la pince sur l'aiguille. Comme on le verra plus loin, ce limiteur d'effort est particulièrement utile en début et en fin d'opération lorsque la partie en forme de fraise de la première pièce tournante détache les points de soudure du fil sur l'aiguille.

Dans le mode de réalisation préféré, le chariot est entraîné par une chaîne sans fin actionnée par un moteur auquel est associé un limiteur de couple et c'est ce dernier qui exerce la fonction de limiteur d'effort.

On peut prévoir avantageusement un automate programmable commandant le cycle complet de détachement du fil d'une aiguille donnée. Dans ce cas, on peut prévoir un capteur d'effort lié d'une part aux moyens d'entraînement et d'autre part à cet automate programmable. Ce capteur peut ainsi détecter le début et la fin du fraisage et commander à l'automate de passer à la phase suivante du cycle de découpage du fil. Enfin, selon un dernier aspect de l'invention, la machine comprend au moins un ensemble de guidage de l'aiguille. De préférence, cet ensemble de guidage comprend :

- un premier galet ayant une gorge apte à recevoir l'aiguille,
- un deuxième galet pouvant être mis en contact avec l'aiguille lorsque celle-ci est dans ladite gorge, et
- des moyens d'application du deuxième galet sur le premier.

Dans le mode de réalisation préféré, le premier galet est placé sous le deuxième et il a son axe sensiblement horizontal. Quant aux moyens d'application, ils comprennent :

- un bras mobile en rotation autour d'un axe horizontal porté par la machine et ayant une extrémité libre sur laquelle est monté le deuxième galet, et
- un contrepoids pouvant être fixé sur ce bras à un endroit désiré entre son extrémité libre et ledit axe porté par la machine.

En général, il y a plusieurs ensembles de guidage constitués par deux galets tel qu'indiqué ci-dessus. Le fait qu'on puisse déplacer le contrepoids le long du bras et le fixer à un endroit déterminé permet de déterminer avec précision la force d'application du deuxième galet sur l'aiguille.

L'invention apparaîtra mieux à la lecture de la description qui va suivre, donnée à titre purement illustratif et nullement limitatif, en référence aux dessins annexés dans lesquels :

- la figure 1 est une vue schématique de l'ensemble de la machine objet de l'invention,
- la figure 2 est une vue schématique en coupe et en perspective, à échelle agrandie, de la première et de la deuxième pièces tournantes,
- la figure 3 est une vue schématique en coupe verticale montrant comment sont montés les moyens de mise en rotation de ces deux pièces tournantes,

- la figure 4 est une vue schématique en élévation montrant les moyens d'entraînement en translation de l'aiguille sur laquelle est enroulé le fil à enlever,
- la figure 5 est une vue en coupe suivant la ligne V-V de la figure 4, et
- les figures 6a à 6e sont des vues schématiques montrant le cycle d'enlèvement du fil enroulé sur une aiguille.

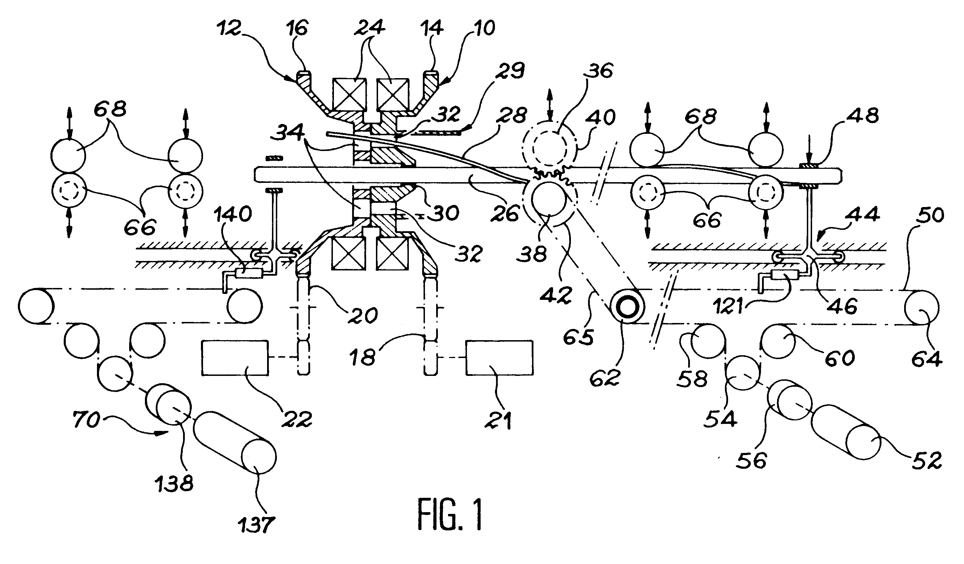

Si l'on se reporte à la figure 1, on voit que cette machine se compose essentiellement de deux pièces tournantes, à savoir une première pièce tournante 10 et une deuxième pièce tournante 12. Chacune de ces pièces a une face avant se trouvant du côté droit lorsqu'on regarde la figure et une face arrière se trouvant du côté gauche. Ces deux pièces ont un axe de rotation commun. La face arrière de la première pièce 10 a une forme généralement plane et perpendiculaire à cet axe de rotation, de même que la face avant de la deuxième pièce tournante 12. Ces deux faces peuvent donc être mises en contact l'une avec l'autre. Cette disposition permet de cisailler le fil comme cela sera expliqué ci-dessous.

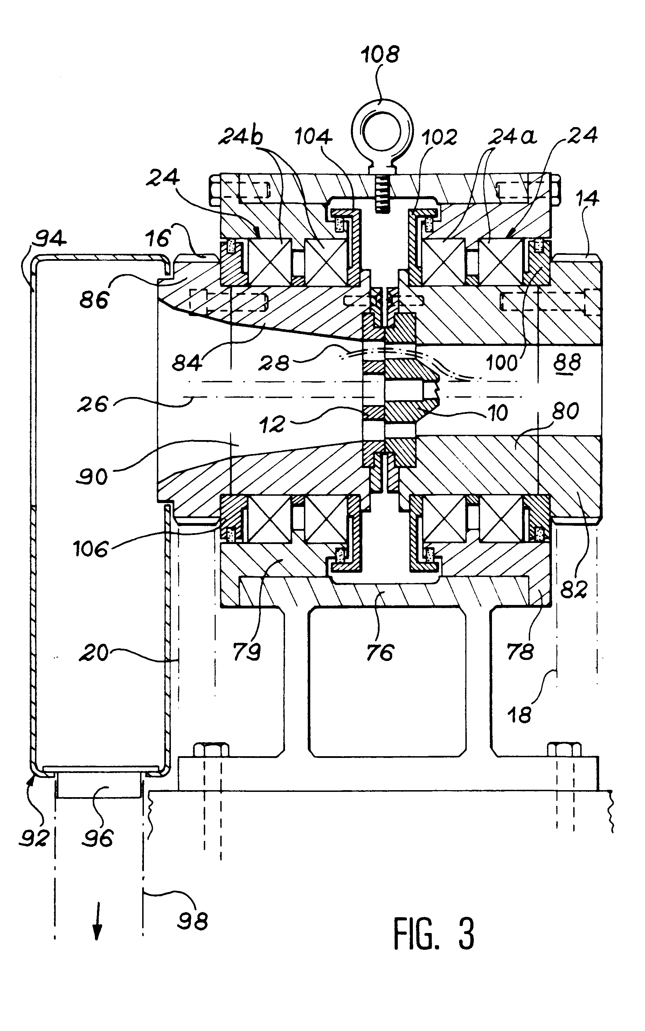

Les deux pièces tournantes 10 et 12 sont solidaires de couronnes dentées 14 et 16 respectivement. Ces dernières sont reliées à des pignons 18 et 20 mis en route grâce à des moteurs 21 et 22 respectivement. Des roulements 24 permettent à chacune des deux pièces 10 et 12 de tourner à l'intérieur d'un support cylindrique. Les moyens de montage et de mise en rotation des pièces 10 et 12 seront décrits ci-dessous en référence à la figure 3.

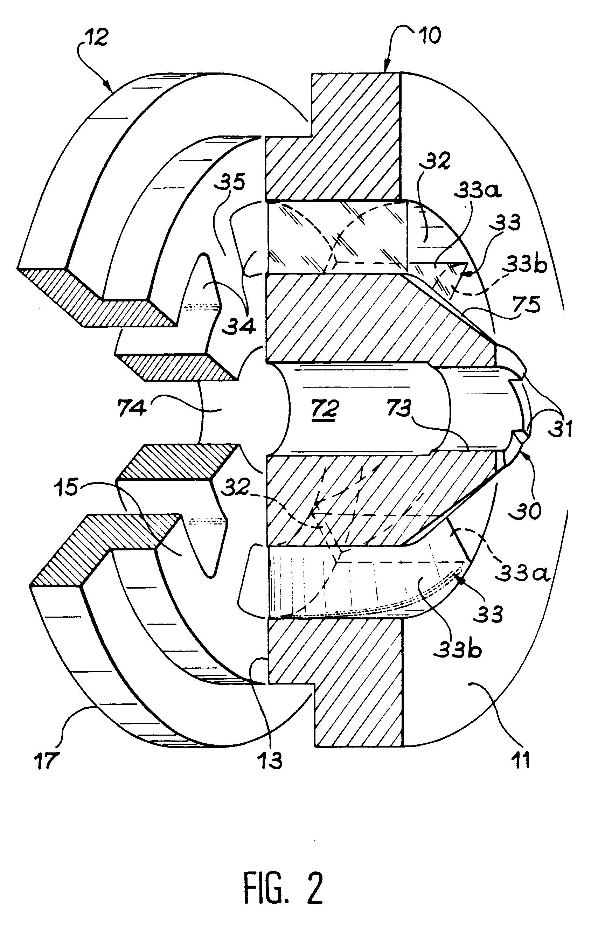

La première pièce tournante 10 présente, dans sa partie centrale et sur sa face avant, une partie en forme de fraise 30 ayant une ouverture de diamètre légèrement supérieur à celui de l'aiguille 26 sur laquelle est enroulé le fil 28. Ce dernier est généralement fixé aux deux extrémités de l'aiguille par des points de soudure. Cette fraise sert à casser le premier point de soudure et détacher l'extrémité antérieure du fil lorsque l'extrémité antérieure de l'aiguille est introduite dans le passage central prévu au centre de la pièce tournante 10, et à détruire le deuxième point de soudure en fin de cycle. Le fil ayant été ainsi détaché, et l'aiguille 26 continuant son mouvement de translation de la droite vers la gauche en regardant la figure 1, l'extrémité antérieure du fil passe sur une partie en forme de tronc de cône et arrive dans un trou 32 prévu sur la première pièce tournante 10 et peut passer ensuite dans un trou 34 prévu sur la deuxième pièce tournante 12. Les moteurs 21 et 22 étant réglés pour que les deux pièces aient des vitesses de rotation différentes, le découpage du fil est obtenu par cisaillement à l'instant où les trous 32 et 34 ne sont plus en coïncidence. Les pièces tournantes 10 et 12 seront décrites plus en détail ci-dessous en référence à la figure 2.

Afin de s'assurer que le fil pénètre bien dans les trous 32 de la première pièce tournante 10, on peut prévoir un système de guidage constitué par exemple par un tube cylindrique 29 dont le diamètre intérieur est sensiblement égal à celui de l'espace occupé par les trous 32.

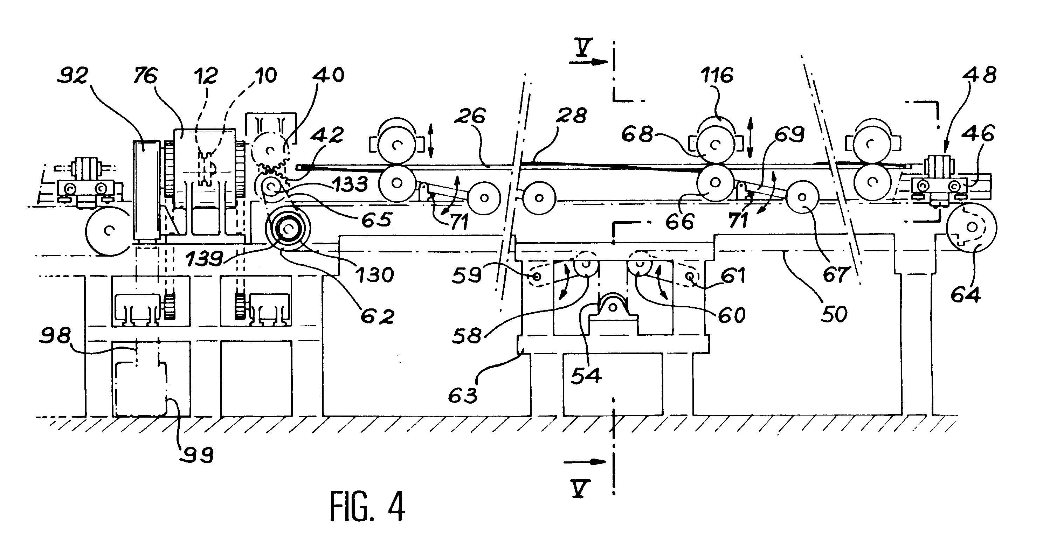

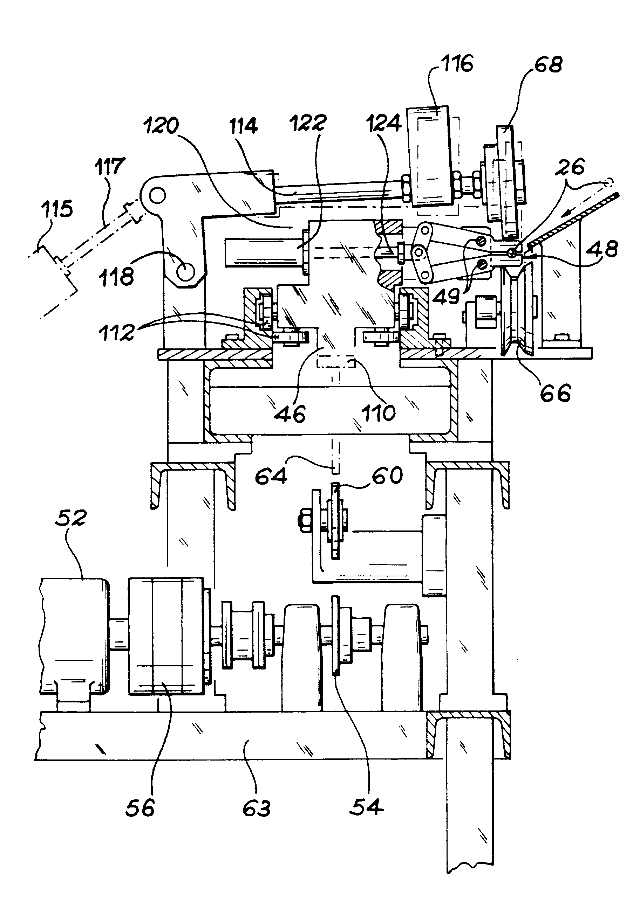

On voit encore sur la figure 1 qu'on a prévu deux galets dentés 36 et 38 dont les parties constituant des roues dentées portent les références 40 et 42 respectivement. Le galet 38 est fixe et se trouve au-dessous de l'aiguille 26 tandis que le galet 36 se trouve au-dessus de cette dernière et peut être appliqué sur celle-ci, comme cela est symbolisé par la double flèche sur la figure 1. La mise en mouvement des galets 36 et 38 est assurée par l'intermédiaire des moyens d'entraînement 44 qui seront décrits plus loin en référence aux figures 4 et 5. Le rôle des galets 36 et 38 est d'exercer une pression sur le fil à un endroit situé légèrement en avant de la pièce tournante 10 par rapport au sens de déplacement de l'aiguille afin de maintenir le fil tendu et de s'assurer qu'il puisse pénétrer dans les trous 32 et 34 comme indiqué ci-dessus.

En plus de leur fonction d'assurer le synchronisme de rotation des galets 36 et 38, les roues dentées 40 et 42 ont pour fonction de réaliser l'interpénétration des deux galets afin que le fil ne s'en échappe pas quand il est en contact avec les cercles correspondant aux cercles primitifs des dentures. Ceci risquerait de se produire avec des galets lisses car le galet supérieur n'est pas rigidement positionné en hauteur pour s'adapter à la géométrie de la section de l'ensemble constitué par l'aiguille et le fil.

Les moyens de déplacement de l'aiguille, portant la référence générale 44, se composent essentiellement d'un chariot 46 mobile en translation sur lequel est montée solidairement une pince 48 apte à enserrer l'aiguille 26 à une extrémité de celle-ci. Le chariot 46 est lié à une chaîne 50 représentée schématiquement en traits mixtes sur la figure 1. La chaîne 50 est mise en mouvement par un moteur 52, lequel agit sur un pignon 54 par l'intermédiaire d'un limiteur de couple 56. Comme on le verra plus loin, le chariot 46 peut être lié à la chaîne 50 par un capteur d'effort 121. Ce dernier peut également consister en un capteur de couple monté sur l'arbre du moteur 52.

Les pignons 58 et 60 peuvent être déplacés afin de donner à la chaîne 50 la tension voulue, tandis que les pignons 62 et 64 sont placés dans un même plan horizontal de manière à définir une portion horizontale de la chaîne correspondant à la zone de déplacement du chariot 46. Une chaîne 65 relie le pignon 62 au galet 38 afin d'assurer le synchronisme des mouvements du chariot 46 et des galets 36 et 38, comme cela sera décrit plus loin en référence à la figure 4.

Il est encore prévu une série d'ensembles de guidage de l'aiguille constitués d'un galet inférieur 66 et d'un galet supérieur 68. Ces galets peuvent être appliqués sur l'aiguille de bas en haut et de haut en bas respectivement, comme cela est indiqué par les flèches doubles sur la figure 1, et leur montage sera décrit de façon plus détaillée dans la suite de la présente description en référence à la figure 5.

Sur la figure 1, les moyens de déplacement 44 de l'aiguille se trouvent du côté droit par rapport à l'ensemble des pièces tournantes 10 et 12. Cependant, on a prévu d'autres moyens de déplacement 70 situés du côté gauche en regardant la figure 1, c'est-à-dire après les pièces tournantes 10 et 12 par rapport au sens de déplacement de l'aiguille. En effet, on comprend qu'il est nécessaire, après que l'aiguille a traversé les pièces tournantes 10 et 12, de l'entraîner et de la guider jusqu'à un lieu de stockage ou d'attente avant de la transporter ailleurs. D'autre part, dans le mode préféré de réalisation illustré ici, il est nécessaire que la pince 48 lâche l'aiguille avant que l'extrémité de celle-ci ne passe entre les galets 36 et 38. C'est donc à ce moment que l'aiguille est prise en charge, à son autre extrémité, par d'autres moyens d'entraînement en translation jusqu'à ce qu'elle ait complètement traversé les deux pièces tournantes. Les moyens 70 peuvent être identiques aux moyens 44 et ne seront pas décrits en détail ici.

La figure 2 montre de manière détaillée la constitution des pièces tournantes 10 et 12. On voit que ces deux pièces sont placées sensiblement suivant un plan vertical et sont mobiles en rotation autour d'un axe horizontal. La première pièce tournante 10 présente une face avant 11 et une face arrière 13 tandis que la deuxième pièce tournante présente une face avant 15 et une face arrière 17. Les faces avant se trouvent du côté droit des pièces en regardant la figure 2 tandis que la face arrière se trouve du côté gauche.

La pièce 10 est percée d'un passage central 72 de forme sensiblement cylindrique et ayant un axe de révolution confondu avec l'axe de rotation commun des pièces 10 et 12. La pièce 12 a un passage central 74 également cylindrique d'axe confondu avec cet axe de rotation. Les passages 72 et 74 traversent de part en part les pièces 10 et 12 respectivement.

La pièce 10 présente, dans sa partie centrale, une partie 30 en forme de fraise qui entoure l'ouverture d'entrée du passage 72. A cet endroit, celui-ci présente une partie étroite 73 dont le diamètre est égal ou légèrement supérieur au diamètre de l'aiguille. Lorsqu'on introduit la première extrémité de celle-ci dans la partie 73 du passage 72, la pièce 10 est en rotation et il arrive un moment où les dents 31 de la fraise 30 sont en contact avec le premier point de soudure servant à fixer le fil sur la première extrémité de l'aiguille. Comme cette dernière est constamment poussée vers la gauche par les moyens d'entraînement, les dents 31 détachent le point de soudure et l'extrémité libre du fil glisse sur une partie en forme de tronc de cône 75 située entre la fraise 30 et la zone de la pièce 10 où se trouvent les trous 32. Il est à noter que la partie 75 s'élargit depuis la fraise 30 jusqu'aux trous 32 puisque ceux-ci entourent le passage central 72. Deux trous 32 adjacents sont séparés par une cloison 33 qui sert à la fois au guidage et au maintien du fil lorsque celui-ci est coupé par cisaillement comme on le verra plus loin.

Chaque cloison 33 présente une face plane 33a et une face courbe 33b. Le plan de la face 33a est un plan radial, c'est-à-dire qu'il contient l'axe de rotation de l'ensemble. La forme de la face 33b est telle que la cloison 33 s'épaissit de la face d'entrée vers la face de sortie. Du côté de la face d'entrée de la pièce 10, les deux faces de la cloison 33 se rejoignent suivant une arête disposée radialement tandis que chaque trou 32 débouche sur la face de sortie de la pièce 10 par une fente mince disposée radialement. Grâce à cette disposition, on est sûr que le fil pénètrera bien dans un trou 32 au cours de la rotation de la pièce 10 et le cisaillement du fil est facilité.

La face arrière 13 de la pièce 10 et la face avant 15 de la pièce 12 ont au moins leur partie centrale plane et perpendiculaire à l'axe de rotation. Les pièces 10 et 12 sont disposées de sorte qu'un jeu faible soit ménagé entre les faces 13 et 15.

On voit aussi que la pièce 12 comporte une série de trous 34 régulièrement répartis autour du passage central et séparés les uns des autres par des parties pleines formant cisailles 35.

Pour procéder à la coupe du fil, les pièces 10 et 12 sont mises en rotation soit en sens inverse l'une de l'autre, soit dans le même sens mais à des vitesses différentes. Ainsi, il arrive un moment où un trou 32 de la pièce 10 coïncide plus ou moins avec un trou 34 de la pièce 12. L'aiguille continuant son mouvement de la droite vers la gauche, le fil traverse la pièce 10 en suivant un trou 32 et pénètre dans un trou 34 de la pièce 12. Le mouvement continue jusqu'à ce que cesse la coïncidence des deux trous, ce qui entraîne le cisaillement du fil entre une cloison 33 de la pièce 10 et une cisaille 35 de la pièce 12. Les mouvements de rotation des pièces 10 et 12 ainsi que le mouvement d'avance de l'aiguille sont réglés pour que le cisaillage intervienne lorsqu'une certaine longueur de fil est passée au-delà de la face arrière 17 de la pièce 12 afin que le morceau de fil découpé puisse tomber naturellement par gravité dans un réceptacle qui sera décrit ci-après en référence à la figure 3. Les moyens d'entraînement en rotation de la première pièce tournante 10 sont synchronisés, sauf pendant la phase de fraisage, avec les moyens d'entraînement en translation de l'aiguille 26, de sorte que la première pièce tournante 10 effectue un tour complet lorsque l'aiguille 26 avance d'une distance égale au pas du fil espaceur 28.

Celle-ci montre de manière plus détaillée les moyens de montage des pièces tournantes 10 et 12 sur la machine et leurs moyens de mise en rotation. On voit que ces moyens de montage comprennent essentiellement un support cylindrique 76 creux, d'axe horizontal, et monté de manière fixe sur le bâti de la machine. A l'intérieur du support 76 sont montées une première douille 78 du côté droit en regardant la figure et une deuxième douille 79 du côté gauche. Les deux pièces 10 et 12 sont montées de sorte que la face arrière de la pièce 10 soit séparée par un jeu très faible de la face avant de la pièce 12.

La pièce 10 est rendue solidaire d'un corps cylindrique 80 sur lequel est fixée une pièce 82 portant à sa périphérie la couronne dentée 14 déjà mentionnée ci-dessus en référence à la figure 1. La pièce 82 est mise en rotation (entraînant ainsi la rotation du corps 80 et donc de la pièce 10) par l'intermédiaire du pignon 18 représenté schématiquement en traits mixtes sur la figure 3.

De même, la pièce 12 est rendue solidaire d'un corps cylindrique 84, lequel est à son tour rendu solidaire d'une pièce 86 portant la couronne dentée 16. Cette dernière est mise en mouvement par l'intermédiaire du pignon 20 déjà mentionné ci-dessus en référence à la figure 1 et qui est représenté schématiquement en traits mixtes sur la figure 3.

Il est à noter que les pièces 80 et 82 sont creuses dans leur partie centrale, ménageant ainsi un passage 88 pour l'aiguille 26. Cette dernière, ainsi que le fil 28, sont représentés en traits mixtes sur la figure 3. De même, les pièces 84 et 86 sont constituées de manière à ménager en leur centre un passage 90 pour l'aiguille 26 une fois que celle-ci a traversé les pièces 10 et 12. Il est à noter que, si le passage 88 a la forme d'un cylindre dont les génératrices sont parallèles à l'axe de rotation du système, le passage 90 a une forme telle que sa section croît régulièrement au fur et à mesure qu'on s'éloigne de la pièce 12. Ceci a pour but de ménager à sa partie inférieure une surface inclinée qui descend au fur et à mesure qu'on s'éloigne de la pièce 12 afin que les morceaux du fil 28 détachés par cisaillage entre les pièces 10 et 12 puissent tomber naturellement à l'intérieur d'un réceptacle 92.

Celui-ci a une ouverture qui peut être mise en coïncidence avec l'ouverture de sortie du passage 90 et une deuxième ouverture 94 qui permet le passage de l'aiguille 26 une fois que celle-ci est sortie du passage 90. Le fond de la pièce 92 peut être fermé, le réceptacle 92 constituant ainsi une "poubelle" destinée à recevoir les morceaux de fil. Dans une variante, le fond du réceptacle 92 est ouvert et équipé d'une bague 96 qui lui permet d'être mis en communication avec une goulotte 98 représentée en traits mixtes sur la figure 3, cette goulotte assurant la liaison entre le réceptacle 92 et un autre récipient destiné à recevoir les morceaux de fil.

Les corps cylindriques 80 et 84 sont montés à rotation à l'intérieur des douilles 78 et 79 par l'intermédiaire de roulements 24a et 24b respectivement. Le corps 80 est solidaire d'une bague antérieure 100 et d'une bague postérieure 102 qui encadrent les roulements 24a. De même, le corps 84 est solidaire d'une bague antérieure 104 et d'une bague postérieure 106 qui encadrent les roulements 24b. Des joints sont prévus entre les bagues 100, 102 et la douille 78 d'une part, entre les bagues 104, 106 et la douille 79 d'autre part. Ces joints assurent, au cours de la rotation des pièces tournantes, l'étanchéité entre l'extérieur et la zone où se trouvent les roulements 24. Eventuellement, un anneau 108 vissé à la partie supérieure du support cylindrique 76 permet le transport et la manutention de l'ensemble.

Il est bien entendu que cette disposition ne constitue qu'un exemple particulier de réalisation et qu'on ne sortirait pas du cadre de l'invention en utilisant un montage différent.

On va maintenant décrire les moyens d'entraînement en translation de l'aiguille en référence aux figures 4 et 5. On voit sur la partie gauche de la figure 4 le support cylindrique 76 à l'intérieur duquel se trouvent les pièces tournantes 10 et 12 représentées schématiquement en traits interrompus. On voit également, à gauche du support 76, le réceptacle 92 qui communique, grâce à la goulotte 98, avec le récipient ou poubelle 99. Sur la partie droite de cette figure, on voit le pignon moteur 54, monté sur un bâti 63, par l'intermédiaire duquel le moteur 52 entraîne la chaîne 50 (le moteur et le limiteur de couple 56 ne sont pas visibles sur la figure 4).

On retrouve également sur cette figure les deux pignons 58 et 60 qui permettent de régler la tension de la chaîne. Chacun de ces pignons est monté à l'extrémité d'un bras mobile en rotation autour d'un axe horizontal 59 et 61 respectivement. La fixation de ces bras en une position angulaire déterminée confère la tension désirée à la chaîne 50 représentée schématiquement en traits mixtes. Partant du pignon 54, celle-ci passe d'abord sur le pignon 60 après une course sensiblement verticale, s'en va vers la droite de la figure en suivant un chemin sensiblement horizontal jusqu'au galet 64. Après être passée autour de ce dernier, la chaîne revient suivant un chemin horizontal jusqu'au galet 62 situé à proximité du support 76. Après être passée autour du galet 62, la chaîne revient en direction du bâti 63 en suivant un chemin sensiblement horizontal, passe sur le pignon 58 et revient sur le pignon 54 après avoir suivi un chemin sensiblement vertical. Le chariot 46 portant la pince 48 est solidaire de la chaîne 50, à laquelle il peut être relié par le capteur d'effort 121 (figure 1), en un point situé entre les galets 64 et 62.

Le montage de ce chariot apparaît mieux sur la vue en coupe de la figure 5. On retrouve, à la partie inférieure de cette figure, le moteur 52 qui entraîne le pignon 54 par l'intermédiaire du limiteur de couple 56. On voit également le galet 60 servant à régler la tension de la chaîne ainsi que le galet 64. Pour plus de clarté, la chaîne 50 n'a pas été représentée sur la figure 5, mais elle est fixée à la partie inférieure 110 du chariot 46 par le capteur d'effort 121. Ce chariot est solidaire de galets 112 qui le maintiennent à l'intérieur de pièces définissant un cheminement le long duquel il peut se déplacer en translation horizontale dans une direction perpendiculaire au plan de la figure 5.

On voit également les galets 66 et 68 servant au guidage de l'aiguille 26. Dans l'exemple illustré ici, le galet 66 est situé au-dessous de l'aiguille et il tourne autour d'un axe horizontal. Le galet 66 peut être relié à un contrepoids 67 (figure 4) par l'intermédiaire d'un bras 69 pouvant pivoter autour d'un axe porté par le bâti de la machine. Sous l'effet du contrepoids 67, le galet 66 est poussé vers le haut, donc vers l'aiguille 26. Sa position en hauteur est définie par l'arrivée en position haute contre une butée fixe au cours de la rotation du bras 69 sous l'effet du contrepoids 67. Dans l'exemple décrit ici, c'est le bras 69 qui vient au contact d'une butée 71, mais on ne sortirait pas du cadre de l'invention en utilisant une autre disposition. L'ensemble des butées 71 définit une position nominale pour tous les galets 66.

Quant au galet 68, il est monté à l'extrémité libre d'un bras 114 sur lequel peut être fixé un contrepoids 116. Le bras 114 est mobile en rotation autour d'un axe horizontal 118 porté par le bâti de la machine et le contrepoids 116 peut être déplacé le long du bras 114 et fixé en un endroit quelconque de celui-ci. On peut ainsi, en choisissant judicieusement l'emplacement du contrepoids 116 sur le bras 114, déterminer la force d'application du galet 68 sur l'aiguille 26. Celle-ci est donc comprimée entre les galets 66 et 68 et guidée par eux. Comme cela apparaît sur la figure 4, il y a plusieurs ensembles de galets 66 et 68 disposés le long du trajet parcouru par l'aiguille en amont des pièces tournantes 10 et 12. Comme, de plus, les galets 66 et 68 sont montés sur des bras pouvant osciller librement par rapport à la machine, ils peuvent s'écarter lorsque la pince 48 entraînée par le chariot 46 passe entre eux (fig. 5).

Dans une autre réalisation, le contrepoids 116 est supprimé et les mouvements du bras 114 sont commandés par un vérin 115 relié à ce bras par une tige 117 (le vérin 115 et la tige 117 sont représentés en traits mixtes sur la figure 5).

Il est à noter que, pendant le fraisage des points de soudure aux extrémités de l'aiguille, la vitesse d'avance de cette dernière est limitée par la hauteur des dents de la fraise 30 et la vitesse de rotation de cette dernière. C'est pourquoi on a prévu un limiteur d'effort dans la chaîne cinématique de commande de la pince afin d'effectuer le fraisage avec un effort axial contrôlé.

Dans le mode de réalisation préféré, c'est le limiteur de couple 56 qui exerce la fonction de limiteur d'effort. Un limiteur de couple se compose en général de deux parties tournantes : la partie "aval" (c'est-à-dire la plus éloignée du moteur) s'arrête de tourner quand le couple résistant dépasse un seuil prédéterminé, tandis que la partie "amont" continue de tourner, entraînée par le moteur. Les deux parties tournantes glissent donc l'une sur l'autre à couple constant, ce qui limite l'effort sur la chaîne 50. C'est cet effort qui est mesuré par le capteur d'effort 121 (figure 1).

La pince 48 se compose essentiellement de deux bras mobiles en rotation autour d'axes 49 portés par une pièce solidaire du chariot 46. Dans l'exemple illustré ici, le système de commande 120 de la pince se compose essentiellement d'un vérin 122 équipé d'une tige 124 dont une extrémité est liée aux bras de la pince 48 par des articulations. La force de serrage de la pince 48 sur l'aiguille 26 est donc déterminée par la pression envoyée au vérin.

Si l'on se reporte à nouveau à la figure 4, on voit, immédiatement en avant du support 76, les roues dentées 40 et 42 qui font partie des galets dentés 36 et 38 mentionnés ci-dessus en référence à la figure 1. Le pignon 62 sur lequel passe la chaîne 50 est solidaire en rotation, par l'intermédiaire de la roue libre 139 d'un autre pignon 130, sur lequel passe la chaîne 65 représentée schématiquement en traits mixtes. La chaîne 65 passe sur un autre pignon 133 solidaire de la roue dentée 42. Ainsi, lorsque le moteur 52 (figure 5) est mis en mouvement afin de déplacer la chaîne 50 et donc le chariot 46, ce mouvement entraîne celui du pignon 130 et de la chaîne 65, donc des galets dentés 38 et 36 servant à maintenir le fil sur l'aiguille. Bien entendu, les diamètres des pignons 62, 130 et 133 et des galets 36 et 38 doivent être déterminés afin que la vitesse tangentielle des galets 36 et 38 à leur point de contact avec l'aiguille 28 soit égale à la vitesse de translation du chariot 46.

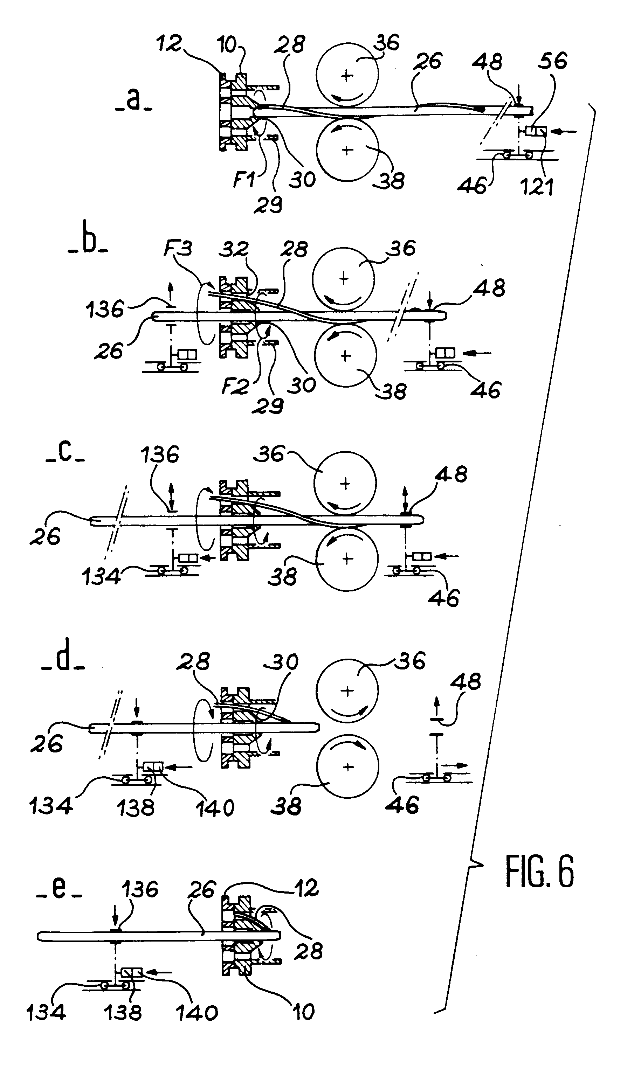

On va maintenant décrire une opération d'enlèvement du fil espaceur d'une aiguille de combustible nucléaire en se référant notamment aux figures 6a à 6e. Au départ, la position est celle illustrée à la figure 4, c'est-à-dire que la totalité de l'aiguille 26 se trouve à droite du support 76 et son extrémité antérieure n'est pas encore passée entre les galets 36 et 38. Dans cette position, l'aiguille est maintenue par les différents ensembles de galets munis de contrepoids tels que 66 et 68. Toujours dans la position de départ, le chariot 46 se trouve à l'extrémité droite de son parcours en regardant la figure 4, c'est-à-dire au voisinage du pignon 64. On manoeuvre le vérin 122 (figure 5) pour que les bras de la pince 48 viennent enserrer l'aiguille au voisinage de l'extrémité postérieure de celle-ci avec la force voulue.

Le moteur 52 est mis en route, ce qui provoque le mouvement de la chaîne et donc l'avancement du chariot de la droite vers la gauche en regardant la figure 4. Au cours de ce mouvement, l'extrémité antérieure de l'aiguille passe entre les galets 36 et 38 et arrive au niveau de la fraise 30, comme cela est illustré à la figure 6a. La pièce tournante 10 a préalablement été mise en rotation dans le sens indiqué par la flèche F1 sur la figure 6a. Le sens de rotation de la pièce 10 pendant le fraisage du point de soudure est choisi de manière à ne pas risquer d'inverser le sens d'enroulement du fil quand celui-ci se détache de l'extrémité de l'aiguille. Il est à noter que, comme indiqué ci-dessus, pendant le fraisage, un effort est exercé sur l'aiguille et cet effort est répercuté sur la pince. Le limiteur d'effort 56 (constitué par le limiteur de couple et représenté symboliquement sur la figure 6a) est monté en série avec le capteur d'effort 121 également représenté symboliquement sur cette figure. Ce capteur détecte le début et la fin du fraisage. Dans le cas préféré où l'on utilise un automate programmable pour commander et contrôler le cycle de découpage du fil enroulé sur une aiguille, c'est ce capteur 121 qui commande à l'automate de passer à la phase suivante de déroulement et de coupe du fil.

Une fois que le premier point de soudure est détaché, l'avance du chariot 46 et donc de la pince 48 est interrompue ainsi que la rotation de la première pièce tournante 10. Celle-ci est ensuite mise en rotation en sens inverse (flèche F2 sur la figure 6b). Comme indiqué plus haut, la vitesse de rotation de la pièce 10 est synchronisée avec la vitesse d'avancement du chariot 46 afin que la pièce 10 effectue un tour complet lorsque le chariot, et donc l'aiguille, s'est déplacé d'une distance égale au pas d'enroulement du fil sur l'aiguille. Ceci permet de maintenir l'extrémité libre du fil à l'intérieur du même trou 32 de la pièce 10. Comme il y a plusieurs trous 32 sur la pièce 10, séparés seulement par l'arête mince des cloisons 33 sur la face avant de la pièce 10, ceci permet au fil de trouver instantanément une issue en pénétrant dans un trou. Si ce n'était pas le cas, il flamberait en arrivant contre une paroi séparant deux trous voisins. Eventuellement, une telle disposition permettrait également d'utiliser une machine de ce type pour l'enlèvement et la découpe de plusieurs fils enroulés sur une même pièce cylindrique.

En même temps que la pièce 10 est mise en rotation dans le sens de la flèche F2, la pièce 12 est mise en rotation à son tour dans le sens de la flèche F3 sur la figure 6b. La vitesse de rotation de la pièce 12 est choisie en fonction de la longueur des tronçons de fil que l'on veut obtenir. Les cloisons 33 présentant une arête mince du côté de la face avant de la pièce 10, ceci garantit à tout coup l'entrée de l'extrémité du fil dans l'un des trous 32. Le chariot, et donc l'aiguille, continuant d'avancer, il arrive un moment où l'extrémité du fil peut pénétrer dans l'un des trous 34 de la pièce 12. Dans le cas particulier illustré à la figure 6b, les pièces 10 et 12 tournent dans des sens opposés. Il arrive donc un moment où le trou 32 cesse d'être en coïncidence avec le trou 34 de la pièce 12, ce qui provoque la rupture du fil par cisaillement. Immédiatement après le cisaillement, l'extrémité du fil se trouve en butée contre une partie pleine 35 séparant deux trous 34 de la pièce 12. Pendant ce temps, l'aiguille avance encore d'une certaine distance. Cependant, l'élasticité de la portion de fil comprise entre les galets 36 et 38 d'une part et la pièce 12 d'autre part, suffit à compenser la mise en compression passagère du fil. De toute façon, au bout d'un temps très court, l'extrémité du fil se trouve en face d'un autre trou 34 de la pièce 12 et peut pénétrer dans celui-ci.

Le cycle continuant, on arrive ainsi à la position de la figure 6c où l'extrémité postérieure de l'aiguille 26 arrive au voisinage immédiat des galets 36 et 38. Il est donc nécessaire qu'à ce moment là, la pince 48 s'écarte et que l'aiguille soit prise en charge par les moyens d'entraînement 70 représentés schématiquement dans la partie gauche de la figure 1. Ces moyens d'entraînement comprennent un chariot 134 (figure 6c) sur lequel est montée une pince 136. Le chariot 134 et la pince 136 peuvent être identiques au chariot 46 et à la pince 48. La deuxième pince 136 est entraînée en translation à une vitesse égale à celle de la pince 48 et elle est manoeuvrée de manière à enserrer l'aiguille au cours de ce mouvement. Immédiatement après, la première pince 48 s'ouvre, et son mouvement de translation vers la gauche s'arrête, afin qu'elle ne passe pas entre les galets 36 et 38. Pour que ceux-ci puissent continuer à tourner jusqu'à ce que l'aiguille 28 en soit sortie, bien qu'à ce moment-là la chaîne 50 soit immobile, on a prévu une roue libre 139 associée au pignon 130 (figure 4). Quand la pince 48 s'ouvre, on arrête la chaîne 50, mais la roue libre 139 permet le mouvement de la chaîne 65 et donc la rotation des galets 36 et 38 entraînés par frottement sur l'aiguille, celle-ci étant elle-même entraînée par la pince 136. On peut commander le retour rapide du chariot 46 à sa position de départ dès que la pince 48 est ouverte. Ce mouvement peut être commandé par un automate programmable relié à un capteur qui détecte si la pince est ouverte ou fermée. Eventuellement cet automate programmable peut également commander, à ce moment-là, la levée des galets presseurs 68 par l'intermédiaire du système à vérin 115.

On arrive ainsi à la situation illustrée à la figure 6d où l'on voit que le deuxième point de soudure situé à l'extrémité postérieure de l'aiguille approche de la fraise 30. Les moyens d'entraînement 70 (figure 1) sont de préférence identiques aux moyens d'entraînement 44 avec un moteur d'entraînement 137 associé à un limiteur de couple 138 qui exerce la fonction de limiteur d'effort. Quant au capteur 140, il peut être identique au capteur 121 et monté de la même manière. C'est ce deuxième capteur 140 qui détecte l'arrivée du deuxième point de soudure au contact de la fraise 30 par une montée d'effort contrôlée par le limiteur d'effort 138. Ce signal déclenche l'inversion du sens de rotation de la pièce 10 ainsi que le changement de la vitesse de rotation de cette pièce. Lorsque le deuxième point de soudure est complètement détaché, le tronçon de fil restant tombe à l'avant de la pièce 10 tandis que l'aiguille suivante (qui a pu être introduite dès que le chariot 46 est revenu à sa position de départ) approche à son tour de la fraise 30. Le cycle se termine lorsque la deuxième pince 136, après avoir complètement extrait l'aiguille non seulement des pièces 10 et 12, mais également du support 76 et du réceptacle 92, la dépose sur un banc de réception et revient à son point de départ. Quant aux aiguilles à traiter, elles peuvent être stockées sur un autre banc de réception et être introduites une à une sur les galets 66. Des ensembles de guidage 66, 68 équipent également les moyens d'entraînement 70.

La machine objet de l'invention présente des avantages particulièrement intéressants dont le principal est qu'elle permet une découpe rapide et efficace du fil espaceur des aiguilles de combustible nucléaire sans usure notable de l'outil de coupe. De plus, elle peut être réglée pour que les tronçons de fil soient de courte longueur (de l'ordre de 10 mm), ce qui conduit à un taux de compacité élevé lors de leur chute naturelle dans un récipient d'évacuation. De plus, une telle machine permet un bon rendement puisqu'une aiguille donnée peut passer rapidement à travers le dispositif et que l'aiguille suivante peut être introduite immédiatement après la sortie de l'aiguille précédente.

Enfin, il est bien entendu que l'invention ne se limite pas au seul mode de réalisation qui vient d'être décrit ici, mais qu'on peut envisager de nombreuses variantes sans sortir pour autant du cadre de l'invention. C'est ainsi que l'homme du métier pourra faire varier à sa guise, en fonction de chaque application particulière envisagée, la forme et les dimensions des différentes pièces constituant la machine, déterminer les vitesses de translation ou de rotation des différents éléments, ou de remplacer un élément particulier (par exemple les limiteurs et capteurs d'effort) par tout autre dispositif équivalent. D'autre part, si dans le cas illustré aux figures 6a à 6e, les pièces 10 et 12 tournent en sens inverse l'une de l'autre pour effectuer la découpe du fil par cisaillement, on ne sortirait pas du cadre de l'invention en les faisant tourner dans le même sens, pourvu que leurs vitesses de rotation soient différentes. Enfin, si les pignons 36 et 38 sont en général réglés de sorte que leur vitesse tangentielle au point de contact avec l'aiguille soit égale à la vitesse de translation imprimée à celle-ci par le chariot 46 et la pince 48, on peut également régler le système d'entraînement des pignons pour que la vitesse de translation de l'aiguille soit légèrement plus faible que la vitesse tangentielle des galets afin de tendre légèrement le fil sur l'aiguille.

**Revendications**

1. Machine pour l'enlèvement du fil espaceur (28) d'une aiguille (26) de combustible nucléaire, le fil (28) étant enroulé en hélice autour de l'aiguille (26) et celle-ci étant de forme sensiblement cylindrique, caractérisée en ce qu'elle comprend :
   - une première et une deuxième pièces tournantes (10, 12) mobiles en rotation autour d'un même axe et ayant chacune :
     . une face avant (11, 15),
     . une face arrière (13, 17), la face avant de la deuxième pièce tournante (12) étant sensiblement en contact avec la face arrière de la première (10),
     . un passage central (72, 74) le long duquel peut passer ladite aiguille (26), ce passage (72, 74) présentant une ouverture d'entrée sur la face avant et une ouverture de sortie sur la face arrière et ayant une forme sensiblement cylindrique d'axe confondu avec ledit axe de rotation, et
     . une série de trous (32, 34) à travers lesquels le fil (28) peut passer, ces trous (32, 34) étant plus éloignés que le passage central (72, 74) de l'axe de rotation et ayant une ouverture d'entrée sur la face avant et une ouverture de sortie sur la face arrière, la disposition étant telle que l'ouverture de sortie d'un trou (32) de la première pièce tournante (10) puisse coïncider au moins partiellement avec l'ouverture d'entrée d'un trou (34) de la deuxième pièce tournante (12),
   - des moyens d'entraînement en rotation de la première pièce tournante (10),
   - des moyens d'entraînement en rotation de la deuxième pièce tournante (12), et
   - des moyens (44) d'entraînement de l'aiguille (26) en translation suivant son axe pour la faire passer à travers les passages centraux (72, 74) des pièces tournantes (10, 12).

2. Machine selon la revendication 1, caractérisée en ce que, le fil (28) étant fixé sur l'aiguille (26) par au moins un point de soudure, l'ouverture d'entrée du passage central (72) de la première pièce tournante (10) a des dimensions légèrement supérieures à la section droite de l'aiguille (26) et la première pièce tournante (10) comprend :
   - une partie en forme de fraise (30) située au niveau de ladite ouverture d'entrée et constituée de manière à détacher le point de soudure lorsque l'aiguille pénètre dans ledit passage central (72) par l'ouverture d'entrée, et
   - une partie (75) en forme de tronc de cône s'élargissant depuis ladite partie en forme de fraise (30) jusqu'à la zone où se trouvent le ou les trous (32) de la première pièce tournante (10).

3. Machine selon la revendication 1, caractérisée en ce que lesdits moyens d'entraînement (44) se trouvent d'un côté de l'ensemble constitué par les deux pièces tournantes (10, 12) et en ce qu'elle comporte d'autres moyens d'entraînement (70) situés de l'autre coté de cet ensemble.

4. Machine selon la revendication 1, caractérisée en ce qu'elle comporte en outre des moyens (36, 38) pour appliquer le fil (28) sur l'aiguille (26) avant que celle-ci ne pénètre dans le passage central (72) de l'une des pièces tournantes (10).

5. Machine selon la revendication 4, caractérisée en ce que lesdits moyens d'application comprennent :
   - un premier galet (38) ayant une gorge apte à recevoir l'aiguille (26),
   - un deuxième galet (36) ayant une gorge apte à recevoir l'aiguille (26), les dimensions des deux galets étant telles que leurs vitesses tangentielles au point de contact avec l'aiguille soient égales,
   - des moyens pour pousser le deuxième galet (36) en direction du premier (38), et
   - des moyens pour entraîner simultanément en rotation les deux galets (36, 38).

6. Machine selon la revendication 5, caractérisée en ce que les deux galets (38, 36) sont des galets dentés de même diamètre engrenant l'un sur l'autre et en ce que lesdits moyens d'entraînement simultané en rotation de ces deux galets (38, 36) comprennent des moyens d'entraînement en rotation du premier galet (38) synchronisés avec les moyens d'entraînement en translation de l'aiguille (26) afin que ladite vitesse tangentielle soit égale à la vitesse imprimée à l'aiguille (26) par lesdits moyens d'entraînement en translation (44).

7. Machine selon la revendication 1, caractérisée en ce que les moyens d'entraînement en rotation de la première pièce tournante (10) sont synchronisés, sauf pendant la phase de fraisage, avec les moyens d'entraînement en translation de l'aiguille (26) de sorte que la première pièce tournante (10) effectue un tour complet lorsque l'aiguille (26) avance d'une distance égale au pas du fil espaceur (28).

8. Machine selon la revendication 1, caractérisée en ce que les moyens d'entraînement de l'aiguille (26) en translation comprennent :
   - un chariot (46),
   - une pince (48) solidaire du chariot (46) et apte à enserrer l'aiguille (26), et
   - des moyens d'entraînement du chariot (46) en translation.

9. Machine selon la revendication 8, caractérisé en ce que lesdits moyens d'entraînement de l'aiguille (26) comprennent en outre un limiteur d'effort pour contrôler l'effort exercé par la pince (48) sur l'aiguille (26).

10. Machine selon la revendication 9, caractérisée en ce que les moyens d'entraînement du chariot (46) en translation comprennent :
    - une chaîne sans fin (50) ayant au moins une partie rectiligne,
    - des moyens d'accrochage du chariot (46) sur cette chaîne (50) dans sa partie rectiligne,
    - un moteur (52) d'entraînement de la chaîne (50), et
    - un limiteur de couple (56) associé au moteur (52) et constituant ledit limiteur d'effort.

11. Machine selon la revendication 8, caractérisée en ce qu'elle comprend en outre un capteur d'effort (121) lié d'une part à la chaîne (50) et au chariot (46) et d'autre part à un automate programmable commandant la machine.

12. Machine selon la revendication 1, caractérisée en ce qu'elle comprend au moins un ensemble de guidage de l'aiguille.

13. Machine selon la revendication 12, caractérisée en ce que ledit ensemble de guidage comprend :
    - un premier galet (66) ayant une gorge apte à recevoir l'aiguille (26),
    - un deuxième galet (68) pouvant être mis en contact avec l'aiguille (26) lorsque celle-ci est dans ladite gorge, et
    - des moyens d'application du deuxième galet (68) sur le premier.

14. Machine selon la revendication 13, caractérisée en ce que le premier galet (66), positionné en butée, est placé sous le deuxième et a son axe sensiblement horizontal et en ce que lesdits moyens d'application comprennent :
    - un bras (114) mobile en rotation autour d'un axe (118) horizontal porté par la machine et ayant une extrémité libre sur laquelle est monté le deuxième galet (68), et
    - un contrepoids (116) pouvant être fixé sur ce bras (114) à un endroit désiré entre son extrémité libre et ledit axe (118) porté par la machine.

15. Machine selon la revendication 13, caractérisée en ce que le premier galet (66), positionné en butée, est placé sous le deuxième et a son axe sensiblement horizontal et en ce que lesdits moyens d'application comprennent :
    - un bras (114) mobile en rotation autour d'un axe (118) horizontal porté par la machine et ayant une extrémité libre sur laquelle est monté le deuxième galet (68), et

- un vérin (115) relié au bras (114) par une tige (117).

## Claims

1. Machine for removing the spacing wire (28) of a nuclear fuel needle (26), the wire (28) being helically wound around the needle (26) and the latter being substantially cylindrical, characterized in that it comprises:
   - a first and a second rotary parts (10, 12) rotatable about the same axis and having in each case:
     . a front face (11,15),
     . a rear face (13, 17), the front face of the second rotary part (12) being substantially in contact with the rear face of the first (10),
     . a central passage (72, 74) along which it is possible for said needle (26) to pass, said passage (72, 74) having an inlet on the front face and an outlet on the rear face and having a substantially cylindrical shape, whose axis coincides with the said rotation axis and
     . a series of holes (32, 34) through each of which the wire (28) can pass, said holes (32, 34) being further than the central passage (72, 74) from the rotation axis and having an inlet on the front face and an outlet on the rear face, the arrangement being such that the outlet of one hole (32) of the first rotary part (10) can coincide at least partly with the inlet of a hole (34) of the second rotary part (12),
     . means for rotating the first rotary part (10),
     . means for rotating the second rotary part (12), and
     . means (44) for the displacement in translation of the needle (26) along its axis to make it pass through the central passages (72, 74) of the rotary parts (10, 12).

2. Machine according to claim 1, characterized in that with the wire (28) fixed to the needle (26) by at least one welding spot, the inlet of the central passage (72) of the first rotary part (10) has slightly larger dimensions than the cross-section of needle (26) and the first rotary part (10) comprises a milling cutter-like portion (30) positioned level with said inlet and constructed so as to detach the welding spot when the needle penetrates the central passage (72) through the inlet and a truncated cone-shaped portion (75) widening from said milling cutter-like portion (30) to the area where the hole or holes (32) of the first rotary part (10) are located.

3. Machine according to claim 1, characterized in that the drive means (44) are located on one side of the system constituted by the two rotary parts (10, 12) and that it has other drive means (70) located on the other side of said system.

4. Machine according to claim 1, characterized in that it also has means (36, 38) for applying wire (28) to needle (26) before the latter penetrates the central passage (72) of one of the rotary parts (10).

5. Machine according to claim 4, characterized in that said application means comprise a first roller (38) having a groove able to receive the needle (26), a second roller (36) having a groove able to receive the needle (26), the dimensions of the two rollers being such that their tangential speeds at the contact point with the needle are equal, means for forcing the second roller (36) in the direction of the first (38) and means for simultaneously rotating the two rollers (36, 38).

6. Machine according to claim 5, characterized in that the two rollers (38, 36) are toothed rollers with the same diameter and meshing on one another and in that said means for the simultaneous rotation of the two rollers (38, 36) comprise means for rotating the first roller (38) synchronized with means for the translation of needle (26), in order that said tangential speed is equal to the speed imparted to needle (26) by said translation means (44).

7. Machine according to claim 1, characterized in that the means for rotating the first rotary part (10) are synchronized, except during the milling phase, with the means for translating the needle (26), in such a way that the first rotary part (10) performs a complete turn when the needle (26) advances by a distance equal to the spacing of the spacing wire (28).

8. Machine according to claim 1, characterized in that the means for translating needle (26) comprise a carriage (46), a gripper (48) integral with carriage (46) and able to grip the needle (26) and means for translating the carriage (46).

9. Machine according to claim 8, characterized in that the means for driving the needle (26) also comprise a force limiter for controlling the force exerted by gripper (48) on needle (26).

10. Machine according to claim 9, characterized in that the means for translating the carriage (46) comprise an endless chain (50) having at least one linear portion, means for attaching the carriage (46) to said chain (50) in the linear portion thereof, a motor (52) for driving chain (50) and a torque limiter (56) associated with the motor (52) and constituting said force limiter.

11. Machine according to claim 8, characterized in that it also comprises a force transducer (121) connected on the one hand to the chain (50) and to the carriage (46) and on the other hand to a programmable automaton controlling the machine.

12. Machine according to claim 1, characterized in that it comprises at least one needle guide system.

13. Machine according to claim 12, characterized in that the guide system comprises a first roller (66) having a groove able to receive the needle (26), a second roller (68) which can be contacted with needle (26) when the latter is in said groove and means for applying the second roller (68) to the first.

14. Machine according to claim 13, characterized in that the abutting first roller (66) is placed beneath the second and its shaft or axis is substantially horizontal and in that said application means comprise an arm (114) rotatable about a horizontal shaft (118) carried by the machine and having a free end on which is mounted the second roller (68) and a counterweight (116), which can be fixed to said arm (114) at a desired location between its free end and the said shaft (118) carried by the machine.

15. Machine according to claim 13, characterized in that the abutting first roller (66) is placed beneath the second and has its axis or shaft substantially horizontal and in that said application means comprise an arm (114) rotatable about a horizontal shaft (118) carried by the machine and having a free end on which is mounted the second roller (68) and a jack (115) connected to arm (114) by a rod (117).

**Patentansprüche**

1. Maschine zum Entfernen des Abstandsdrahtes (28) eines Kernbrennstabes (26), wobei der Draht (28) wendelförmig um den Stab (26) gewickelt ist und jener im wesentlichen zylindrische Gestalt hat, dadurch gekennzeichnet, daß sie enthält:
ein erstes und ein zweites Drehteil (10, 12), die um dieselbe Achse drehbewglich sind und jeweils haben:
eine Vorderseite (11, 15),
eine Hinterseite (13, 17), wobei die Vorderseite des zweiten Drenteils (12) im wesentlichen in Berührung mit der Hinterseite des ersten Drehteils (10) ist,
einen zentralen Durchgang (72, 74), längs welchem der Stab (26) hindurchgehen kann, wobei dieser Durchgang (72, 74) eine Eintrittsöffnung an der Vorderseite und eine Austrittsöffnung an der Hinterseite aufweist und eine im wesentlichen zylindrische Achse aufweist, die mit der Drehachse zusammenfällt, und
eine Serie von Löchern (32, 34), durch die der Draht (28) verlaufen kann, wobei diese Löcher (32, 34) weiter sind, als der zentrale Durchgang (72, 74) der Drehachse und eine Eintrittsöffnung an der Vorderseite und eine Austrittsöffnung an der Hinterseite haben, wobei die Anordnung derart ist, daß die Austrittsöffnung eines Lochs (32) des ersten Drehteils (10) wenigstens teilweise mit der Eintrittsöffnung eines Lochs (34) des zweiten Drehteils (12) in Übereinstimmung gelangen kann,
Drehantriebseinrichtungen des ersten Drehteils (10),
Drehantriebseinrichtungen des zweiten Drehteils (12), und
Einrichtungen (44) zum Antreiben des Stabes (26) in längsrichtung in seiner Achse, um ihn durch die zentralen Durchgänge (72, 74) der Drehteile (10, 12) passieren zu lassen.

2. Maschine nach Anspruch 1, dadurch gekennzeichnet, daß der Draht (28) an dem Stab (26) durch wenigstens einen Schweißpunkt befestigt ist, die Eintrittsöffnung des zentralen Druchgangs (72) des ersten Drehteils (10) Abmessungen aufweist, die leicht größer als der Querschnitt des Stabes (26) sind, und das erste Drehteil (10) enthält:
einen ersten Teil in Form eines Fräsers (30), der in Höhe der genannten Eintrittsöffnung angeordnet ist und derart ausgebildet ist, daß er den Schweißpunkt löst, wenn der Stab in den genannten zentralen Durchgang (72) durch die Eintrittsöffnung eintritt, und
einen Teil (75) in Form eines Kegelstumpfes, der sich von dem fräserförmigen Teil (30) bis in die Zone erweitert, wo sich das oder die Löcher (32) des ersten Drehteils (10) befinden.

3. Maschine nach Anspruch 1, dadurch gekennzeichnet, daß die genannten Antriebseinrichtungen (44) sich auf einer Seite der Anordnung befinden, die von den zwei Drehteilen (10, 12) gebildet wird, und daß sie weitere Antriebseinrichtungen (70) enthält, die auf der anderen Seite dieser Anordnung gelegen sind.

4. Maschine nach Anspruch 1, dadurch gekennzeichnet, daß sie weiterhin Einrichtungen (36, 38) enthält, um den Draht (28) an dem Stab (26) anzubringen, bevor dieser in den zentralen Durchgang (72) eines der Drehteile (40) eintritt.

5. Maschine nach Anspruch 4, dadurch gekennzeichnet, daß die Anbringeinrichtungen enthalten:
eine erste Walze (38), die eine Kehle zur Aufnahme des Stabs (26) aufweist,
eine zweite Walze (36), die eine Kehle zur Aufnahme des Stabes aufweist, wobei die Abmessungen dieser zwei Walzen derart sind, daß ihre Tangentialgeschwindigkeiten am Berührungspunkt mit dem Stab gleich sind,
Einrichtungen zum Drucken der zweiten Walze (36) in Richtung auf die erste (38), und
Einrichtungen zum rechtzeitigen Drehantreiben der zwei Walzen (36, 38).

6. Maschine nach Anspruch 5, dadurch gekennzeichnet, daß die zwei Walzen (38, 36) Zahnwalzen gleichen Durchmessers sind, die ineinander kämmen, und daß die Einrichtungen zum gleichzeitigen Drehantreiben der zwei Walzen (38, 36) Drehantreibeinrichtungen für die erste Walze (38) sind, die mit den Einrichtungen zum translatorischen Antreiben des Stabes (26) synchronisiert sind, damit die genannte Tangentialgeschwindigkeit gleich der Gechwindigkeit ist, die dem Stab (26) durch die Einrichtungen (44) zum translatorischen Antreiben aufgeprägt ist.

7. Maschine nach Anspruch 1, dadurch gekennzeichnet, daß die Drehantriebseinrichtungen des ersten Drehteils (10) außer in der Fräsphase mit den Einrichtungen zum translatorischen Antrieb des Stabes (26) derart synchronisiert sind, daß das erste Drenteil (10) eine vollständige umdrehung ausführt, wenn der Stab (26) um eine Distanz sich vorbewegt, die gleich der Steigung des Abstandsdrahtes (28) ist.

8. Maschine nach Anspruch 1, dadurch gekennzeichnet, daß die Einrichtungen zum translatorischen Antrieb des Stabes (26) enthalten:
einen Schlitten (46),
eine mit dem Schlitten (46) fest verbundene Klammer (48) zum Festspannen des Stabes, und
Antriebseinrichtungen für den Längsantrieb des Schlittens (46).

9. Maschine nach Anspruch 8, dadurch gekennzeichnet, daß die Einrichtungen zum Antreiben des Stabes (26) weiterhin einen Kraftbegrenzer enthalten, um die Kraft zu beeinflussen, die von der Klammer auf den Stab (26) ausgeübt wird.

10. Maschine nach Anspruch 9, dadurch gekennzeichnet, daß die Einrichtungen für den Längsantrieb des Schlittens (46) enthalten:
eine endlose Kette (50), die wenigstens einen geradlinigen Anschnitt aufweist,
Einrichtungen zum Verankern des Schlittens (46) an der Kette (50) in ihrem geradlinigen Abschnitt,
einen Antriebsmotor (52) für die Kette (50), und
einen Drehmomentbegrenzer (56), der dem Motor (52) zugeordnet ist und der den Kraftbegrenzer bildet.

11. Maschine nach Anspruch 8, dadurch gekennzeichnet, daß sie weiterhin einen Kraftaufnehmer (121) aufweist, der einerseits mit der Kette (50) und dem Schlitten (46) und andererseits mit einem programmierbaren Steuerautomaten der Maschine verbunden ist.

12. Maschine nach Anspruch 1, dadurch gekennzeichnet, daß sie wenigstens eine Führungseinrichtung für den Stab enthält.

13. Maschine nach Anspruch 12, dadurch gekennzeichnet, daß die Führungseinrichtung enthält:
eine erste Walze (66), die eine Kehle zur Aufnahme des Stabes (26) aufweist,
eine zweite Walze (68), die mit dem Stab (26) in Berührung gebracht werden kann, wenn dieser in der genannten Kehle lieg, und
Einrichtungen zum Andrücken der zweiten Walze (68) an die erste.

14. Maschine nach Anspruch 13, dadurch gekennzeichnet, daß die erste Walze (66) in Anlage positioniert unter der zweiten angeordnet ist und eine im wesentlichen horizontale Achse aufweist und daß die Andrückeinrichtungen enthalten:
einen Arm (114), der um eine horizontale Achse (118) drehbeweglich ist, die von der Maschine gehalten wird und die ein freies Ende hat, auf dem die zweite Walze (68) gelagert ist, und

ein Gegengewicht (116), das an dem Arm (114) an einer gewünschten Stelle zwischen seinem freien Ende und der von der Maschine gehaltenen Achse (118) befestigt werden kann.

15. Maschine nach Anspruch 13, dadurch gekennzeichnet, daß die erste Walze (66), in Anlage gehalten, unter der zweiten angeordnet ist und eine im wesentlichen horizontale Achse aufweist, und daß die Andrückeinrichtungen enthalten:

einen Arm (114), der um eine horizontale Achse (118) drehbeweglich ist, die von der Maschine gehalten ist und ein freies Ende hat, an dem die zweite Walze (68) gelagert ist, und

einen Heber (115), der mit dem Arm (114) über eine Stange (117) verbunden ist.

FIG. 1

FIG. 2

FIG. 3

FIG. 4

EP 0 320 357 B1

FIG. 5

FIG. 6